# EUROPEAN PATENT APPLICATION

(11) **EP 4 629 360 A1**
(43) Date of publication of application: **08.10.2025**
(21) Application number: 23912860.6
(22) Date of filing: 26.12.2023
(51) Int. Cl.: H01M 10/04

(54) **MANDREL FOR ELECTRODE ASSEMBLY AND CYLINDRICAL BATTERY CELL PRODUCED USING SAME, AND BATTERY PACK AND VEHICLE COMPRISING CYLINDRICAL BATTERY CELL**

(30) Priority: 26.12.2022 KR 20220185086; 22.12.2023 KR 20230190498
(71) Applicant: LG Energy Solution, Ltd., Seoul 07335 (KR)
(72) Inventor: PARK, Jong-Sik, Daejeon 34122 (KR)
(74) Representative: Goddar, Heinz J.
(86) International application number: PCT/KR2023/021549
(87) International publication number: WO 2024/144185

(57) **Abstract**

Disclosed are a winding rod for an electrode assembly, a cylindrical battery cell produced using the same, and a battery pack and a vehicle including the cylindrical battery cell.

A winding rod for an electrode assembly according to an embodiment of the present disclosure may wind a jelly roll-type electrode assembly, which has a structure in which a positive electrode, a negative electrode, and a separator interposed therebetween are wound in one direction and has a central hole formed at the center, and may include: a first winding member inserted into the central hole of the electrode assembly; and a second winding member inserted into the central hole of the electrode assembly such that the separator is interposed between the first winding member and the second winding member, and configured to wind the electrode assembly together with the first winding member, and an asymmetry prevention portion may be formed on at least one of the first winding member and the second winding member to prevent asymmetry of the electrode assembly.

## Description

### TECHNICAL FIELD

The present application claims priority to Korean Patent Application No. 10-2022-0185086 filed on December 26, 2022 and Korean Patent Application No. 10-2023-0190498 filed on December 22, 2023 in the Republic of Korea, the disclosures of which are incorporated herein by reference.

The present disclosure relates to a winding rod for an electrode assembly, a cylindrical battery cell produced using the same, and a battery pack and a vehicle including the cylindrical battery cell, and more specifically, it relates to a winding rod for an electrode assembly capable of improving asymmetry in the shape of the electrode assembly, a cylindrical battery cell produced using the same, and a battery pack and a vehicle including the cylindrical battery cell.

### BACKGROUND ART

Secondary batteries, which are easy to apply depending on the product group and have electrical features such as high energy density and the like, are generally used in electric vehicles (EVs) or hybrid electric vehicles (HEVs) that are driven by an electrical drive source, as well as in portable devices.

These secondary batteries are attracting attention as a new energy source for improving eco-friendliness and energy efficiency because of the primary advantage of dramatically reducing the use of fossil fuels and another advantage of not generating byproducts resulting from energy use.

Current secondary batteries widely used include lithium-ion batteries, lithiumpolymer batteries, nickel-cadmium batteries, nickel-hydrogen batteries, nickel-zinc batteries, and the like. The operating voltage of this unit secondary battery cell is approximately 2.5V to 4.5V.

Therefore, when an output voltage higher than this is required, a battery module or battery pack is configured by connecting a plurality of battery cells in series. **In** addition, a battery module or battery pack is also configured by connecting multiple battery cells in parallel depending on the charge/discharge capacity required. Accordingly, the number of battery cells included in the battery module or battery pack and electrical connection configurations thereof may be set in various ways depending on the required output voltage or charge/discharge capacity.

Cylindrical, prismatic, and pouch-type battery cells are known as types of secondary battery cells. **In** the case of a cylindrical battery cell, an insulating separator is interposed between a positive electrode plate and a negative electrode plate, and this is wound using a winding rod to form a jelly roll-type electrode assembly that is inserted into a battery can along with an electrolyte, thereby configuring a battery. In addition, the cylindrical battery cell may be provided with a collector plate to electrically connect the positive electrode plates and the negative electrode plates, respectively.

Here, the winding rod for winding the jelly roll-type electrode assembly has a rod shape with a roughly circular cross-section, is inserted into the central hole of the electrode assembly, and rotates while gripping the separator to wind the electrode assembly.

However, when winding the electrode assembly using a conventional winding rod, there is a problem in which the asymmetric difference between the maximum outer diameter of the electrode assembly and the minimum outer diameter of the electrode assembly increases. A large asymmetry difference indicates that the electrode assembly has an asymmetric shape, and if the asymmetry difference is increased, the outer diameter of the entire electrode assembly increases and the capacity decreases. Furthermore, contraction and expansion of the electrode assembly having an asymmetric shape causes a problem with cracks occurring in the electrodes.

**In** addition, when the conventional winding rod comes into contact with and grips the separator, slipping occurs therebetween, resulting in defects when winding the electrode assembly and worsening the asymmetry of the electrode assembly according thereto.

### DISCLOSURE

### Technical Problem

The present disclosure has been designed to solve the problems of the related art, and therefore the present disclosure is directed to providing a winding rod for an electrode assembly capable of improving the asymmetry in the shape of the electrode assembly by optimizing the asymmetric difference of the electrode assembly, a cylindrical battery cell produced using the same, and a battery pack and a vehicle including the cylindrical battery cell,

**In** addition, the present invention is to provide a winding rod for an electrode assembly capable of increasing capacity by improving the asymmetry in the shape of the electrode assembly, a cylindrical battery cell produced using the same, and a battery pack and a vehicle including the cylindrical battery cell.

**In** addition, the present invention is to provide a winding rod for an electrode assembly capable of preventing cracks in the electrodes caused by asymmetry in the shape of the electrode assembly, a cylindrical battery cell produced using the same, and a battery pack and a vehicle including the cylindrical battery cell.

**In** addition, the present invention is to provide a winding rod for an electrode assembly capable of preventing the separator from slipping when gripping the separator and thereby preventing the asymmetry of the electrode assembly from worsening, a cylindrical battery cell produced using the same, and a battery pack and a vehicle including the cylindrical battery cell.

However, the technical problems that the present disclosure seeks to solve are not limited to the above-mentioned problems, and other problems not mentioned above will be clearly understood by those skilled in the art from the description of the invention described below.

### Technical Solution

According to one aspect of the present disclosure, there is provided a winding rod for an electrode assembly to wind a jelly roll-type electrode assembly, which has a structure in which a positive electrode, a negative electrode, and a separator interposed therebetween are wound in one direction and has a central hole formed at the center, the winding rod including: a first winding member inserted into the central hole of the electrode assembly; and a second winding member inserted into the central hole of the electrode assembly such that the separator is interposed between the first winding member and the second winding member, and configured to wind the electrode assembly together with the first winding member, and an asymmetry prevention portion may be formed on at least one of the first winding member and the second winding member to prevent asymmetry of the electrode assembly.

**In** an embodiment, the area of the first winding member may be different from the area of the second winding member.

**In** an embodiment, the cross-section of the first winding member may include: a first curved portion formed in a curve; and a first straight portion configured to connect both ends of the first curved portion.

**In** an embodiment, the asymmetry prevention portion may include a first round portion formed on both ends where the first curved portion and the first straight portion meet.

**In** an embodiment, the asymmetry prevention portion may include a first chamfered portion formed on both ends where the first curved portion and the first straight portion meet.

**In** an embodiment, the asymmetry prevention portion may include a first wave pattern portion formed on both ends where the first curved portion and the first straight portion meet.

**In** an embodiment, the cross-section of the second winding member may include: a second curved portion formed in a curve; and a second straight portion configured to connect both ends of the second curved portion.

In an embodiment, the asymmetry prevention portion may include a second round portion formed on both ends where the second curved portion and the second straight portion meet.

In an embodiment, the asymmetry prevention portion may include a second chamfered portion formed on both ends where the second curved portion and the second straight portion meet.

In an embodiment, the asymmetry prevention portion may include a second wave pattern portion formed on both ends where the second curved portion and the second straight portion meet.

In an embodiment, the first round portion may have a radius of curvature of 0.4 mm to 0.8 mm.

In an embodiment, the second round portion may have a radius of curvature of 0.4 mm to 0.8 mm.

In an embodiment, the first straight portion may include a first fine protrusion formed throughout the first straight portion to prevent the separator from slipping.

In an embodiment, the second straight portion may include a second fine protrusion formed throughout the second straight portion to prevent the separator from slipping.

Meanwhile, according to another aspect of the present disclosure, a cylindrical battery cell produced using the winding rod for an electrode assembly described above may be provided, and a battery pack including at least one cylindrical battery cell described above may be provided, and a vehicle including at least one cylindrical battery cell described above may be provided.

### Advantageous Effects

Embodiments of the present disclosure have the effect of improving the asymmetry in the shape of the electrode assembly by optimizing the asymmetric difference of the electrode assembly.

In addition, embodiments of the present disclosure have the effect of increasing capacity by improving the asymmetry in the shape of the electrode assembly.

In addition, embodiments of the present disclosure have the effect of preventing cracks in the electrodes that may be caused by asymmetry in the shape of the electrode assembly.

In addition, embodiments of the present disclosure have the effect of preventing the separator from slipping when gripping the separator, thereby preventing the asymmetry of the electrode assembly from worsening.

However, the effects obtainable from the present disclosure are not limited to the above-mentioned effects, and other effects not mentioned above will be clearly understood by those skilled in the art from the description of the invention described below.

### DESCRIPTION OF DRAWINGS

The accompanying drawings illustrate a preferred embodiment of the present disclosure and, together with the detailed description of the invention, serve to provide further understanding of the technical idea of the present disclosure, and thus, the present disclosure is not construed as being limited to the drawings.
FIG. 1 is a schematic diagram illustrating the state in which a winding rod for an electrode assembly is coupled to an electrode assembly according to an embodiment of the present disclosure.
FIG. 2 is a schematically cross-sectional view of a winding rod for an electrode assembly according to an embodiment of the present disclosure.
FIG. 3 is a cross-sectional view of a winding rod for an electrode assembly according to a modified embodiment of the present disclosure.
FIG. 4 is a cross-sectional view of a winding rod for an electrode assembly according to another modified embodiment of the present disclosure.
FIGS. 5 to 25 show experimental data of asymmetric differences in round portions having different radii of curvature in a winding rod for an electrode assembly according to an embodiment of the present disclosure.
FIG. 26 shows the average value of asymmetry differences according to the experimental data in FIGS. 5 to 25.
FIG. 27 shows a graph according to the average value of asymmetric differences in FIG. 26.
FIG. 28 is a schematically cross-sectional view of a winding rod for an electrode assembly according to another embodiment of the present disclosure.
FIG. 29 is a diagram schematically illustrating the configuration of a battery pack including a cylindrical battery cell produced using the winding rod for an electrode assembly according to respective embodiments of the present disclosure.
FIG. 30 is a diagram illustrating a vehicle including the battery pack in FIG. 29.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the configurations proposed in the embodiments and drawings of this specification indicate only the most preferable embodiment of the present disclosure and do not represent all technical ideas of the present disclosure, so it should be understood that various equivalents and modifications could be made thereto at the time of filing the application.

The sizes of respective elements or specific parts of each element shown in the attached drawings are exaggerated, omitted, or simplified for convenience of explanation and clarification thereof. Accordingly, the sizes of respective elements do not entirely reflect their actual sizes. Descriptions of related known functions or configurations, which may obscure the subject matter of the present disclosure, will be omitted.

The term "couple" or "connect" used in this specification refers to the case where one member is indirectly coupled or connected to another member through a connection member, as well as the case where one member is directly coupled or connected to another member.

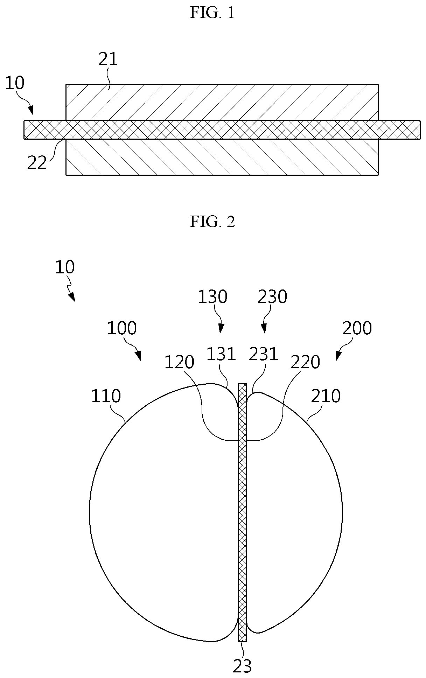

FIG. 1 is a schematic diagram illustrating the state in which a winding rod for an electrode assembly is coupled to an electrode assembly according to an embodiment of the present disclosure, and FIG. 2 is a schematically cross-sectional view of a winding rod for an electrode assembly according to an embodiment of the present disclosure.

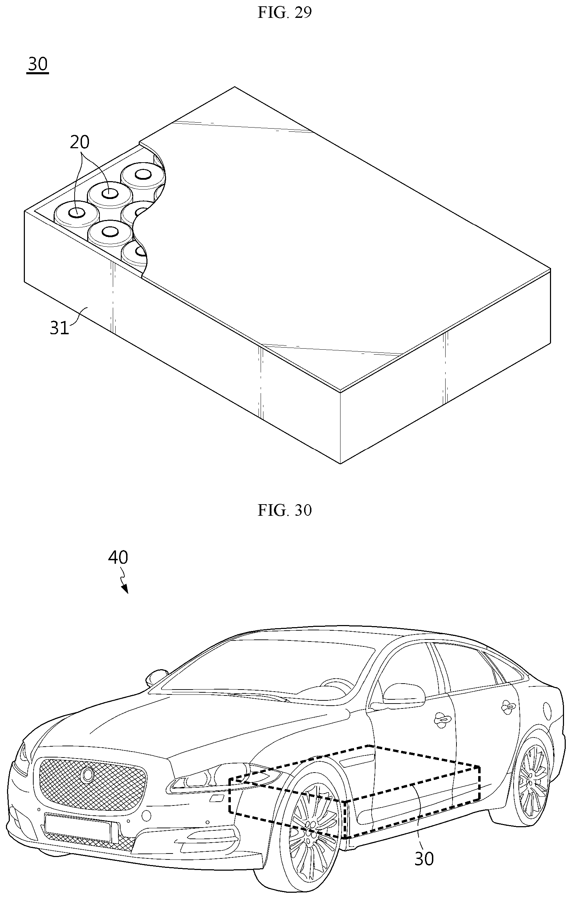

Referring to FIGS. 1 and 2, the winding rod 10 for an electrode assembly according to an embodiment of the present disclosure is intended to wind a jelly roll-type electrode assembly 21 in the manufacturing process of a cylindrical battery cell 20 (see FIG. 29). The electrode assembly 21 may be a jelly roll type having a structure in which a positive electrode (or positive electrode plate), a negative electrode (or negative electrode plate), and a separator 23 interposed therebetween are wound in one direction, and a central hole 22 is formed at the center. Then, the winding rod 10 for an electrode assembly is inserted into the central hole 22 of the electrode assembly 21 to wind the electrode assembly 21. FIG. 2 illustrates only a portion of the separator 23.

Here, the cylindrical battery cell 20 may include an electrode assembly 21, a battery can, and a cap plate.

The electrode assembly 21 has a structure in which a positive electrode plate, a negative electrode plate, and a separator 23 interposed between the positive electrode plate and the negative electrode plate are wound in one direction. **In** addition, a central hole 22 may be formed at the center of the electrode assembly 21, and it may be formed in a jelly roll type.

For example, the electrode assembly 21 may be manufactured by winding a laminate formed by sequentially stacking a negative electrode plate, a separator 23, a positive electrode plate, and the separator 23 at least once. Here, the positive electrode plate and negative electrode plate may be formed in a sheet shape.

That is, the electrode assembly 21 applied to the present embodiment may be a winding-type electrode assembly 21. In this case, an additional separator 23 may be provided on the outer surface of the electrode assembly 21 for insulation from the battery can. That is, the electrode assembly 21 may have a winding structure well known in the related art without limitation.

A positive electrode active material may be applied to one or both sides of the positive electrode plate, and a first uncoated portion to which no positive electrode active material is applied may be formed at the end of the positive electrode plate. The first uncoated portion may form a plurality of turns around the center of the electrode assembly 21 to be exposed to the outside of the separator 23, and may be used as an electrode tab. However, the first uncoated area may not be formed on the positive electrode plate.

A negative electrode active material may be applied to one or both sides of the negative electrode plate, and a second uncoated area to which no negative electrode active material is applied may be formed at the end of the negative electrode plate. The second uncoated portion may form a plurality of turns around the center of the electrode assembly 21 to be exposed to the outside of the separator 23, and may be used as an electrode tab. However, the second uncoated area may not be formed on the negative electrode plate.

Here, when the first uncoated area and the second uncoated area are formed, the first uncoated area and the second uncoated area may be configured to face opposite directions to each other.

**In** addition, any active material known in the art may be used for the positive electrode active material coated on the positive electrode plate and the negative electrode active material coated on the negative electrode plate.

The separator 23 may be configured as a porous polymer film, made of polyolefin polymers such as ethylene homopolymer, propylene homopolymer, ethylene/butene copolymer, ethylene/hexene copolymer, ethylene/methacrylate copolymer, or the like, alone or as a stack thereof.

As another example, the separator 23 may be configured as typical porous non-woven fabric, for example, non-woven fabric made of high-melting point glass fiber, polyethylene terephthalate fiber, or the like

The separator 23 may include a coating layer of inorganic particles on at least one surface thereof. The separator 23 itself may also be made of a coating layer of inorganic particles. The particles constituting the coating layer may have a structure combined with a binder such that an interstitial volume exists between adjacent particles.

In addition, the central hole 22 of the electrode assembly 21 is also used for welding a cell terminal (positive electrode terminal) and a positive electrode collector plate. That is, the cell terminal and the positive electrode collector plate may be welded by radiating a laser through the central hole 22 of the electrode assembly 21.

The electrode assembly 21 is stored in the battery can. In addition, the battery can may have a through-hole formed thereon. Here, the battery can may be formed in a cylindrical shape so that the electrode assembly 21 is stored inside the battery can, and it may be electrically connected to the negative electrode plate of the electrode assembly 21. Accordingly, the battery can may have the same polarity as the negative electrode plate, that is, the negative electrode.

The diameter of the battery can is configured to be greater than the diameter of the electrode assembly 21. A gap of a predetermined size may be formed between the battery can and the positive electrode collector plate, and an insulator may be provided in the gap.

If the size of the electrode assembly 21 is increased in the battery can having a specific size according to the standard, the total capacity of the battery cell 20 increases, but the gap between the battery can and the electrode assembly 21 is reduced.

That is, if the size of the electrode assembly 21 is increased to increase the overall capacity of the battery cell 20, the gap between the battery can and the electrode assembly 21 is reduced, so the increase in the capacity of the battery cell 20 requires the insulator to be provided in the reduced gap between the battery can and the electrode assembly 21, and to this end, it is desirable that the insulator be as thin as possible.

Meanwhile, if the asymmetry in the shape of the electrode assembly 21 is improved by optimizing the asymmetric difference of the electrode assembly 21 by the winding rod 10 for an electrode assembly according to an embodiment of the present disclosure, more positive electrodes and negative electrodes may be disposed inside the same space (e.g., the battery can), thereby increasing overall capacity.

The battery can is a substantially cylindrical container and may be made of a conductive material such as metal. Although the battery can may be made of a conductive metal, such as aluminum, steel, or stainless steel, but is not limited thereto.

The positive electrode collector plate is electrically connected to the positive electrode plate, for example, at the top of the electrode assembly 21. For example, the positive electrode collector plate may be made of a conductive metal material and electrically connected to the first uncoated portion of the positive electrode plate.

The cell terminal is made of a conductive metal material and electrically connected to the positive electrode collector plate. **In** addition, the cell terminal is electrically connected to the positive electrode plate of the electrode assembly 21 through the positive electrode collector plate, thereby having a positive polarity.

That is, the cell terminal may function as a positive electrode terminal. **In** addition, as described above, the battery can may be electrically connected to the negative electrode plate of the electrode assembly 21, thereby having a negative polarity.

The negative electrode collector plate is electrically connected to the negative electrode plate, for example, at the bottom of the electrode assembly 21. For example, the negative electrode collector plate may be made of a conductive metal material such as aluminum, steel, copper, or nickel, and electrically connected to the second uncoated portion of the negative electrode plate.

The negative electrode collector plate may be electrically connected to the battery can. To this end, at least a portion of the edge of the negative electrode collector plate may be interposed between the inner surface of the battery can and a sealing gasket and fixed thereto.

As an embodiment, at least a portion of the edge of the negative electrode collector plate may be fixed to a beading portion by welding while being supported on the bottom surface of the beading portion formed at the bottom of the battery can.

In addition, at least a portion of the remaining portion, excluding the coupling portion of the beading portion of the negative electrode collector plate, may be coupled to a curved surface of the second uncoated portion by welding, for example, laser welding.

In addition, at least a portion of the edge of the negative electrode collector plate may be electrically coupled to one of the upper and lower surfaces of the beading portion, which is adjacent to a crimping portion.

The cap plate is configured to seal the opening formed at the bottom of the battery can. The cap plate may be made of, for example, a metal material to ensure rigidity.

In addition, the cap plate may be separated from the electrode assembly 21 and provided not to have a polarity. That is, the cap plate may not have a polarity even if it is made of a conductive metal material.

The fact that the cap plate does not have polarity indicates that the cap plate is electrically insulated from the battery can and cell terminals. As described above, the cap plate does not need to have polarity, and its material does not necessarily have to be a conductive metal.

The cap plate may be seated on and supported by a beading portion formed on the battery can. In addition, the cap plate is fixed by a crimping portion described later. A sealing gasket may be interposed between the cap plate and the crimping portion of the battery can to ensure airtightness of the battery can. That is, the sealing gasket may be provided to be interposed between the edge of the cap plate and the opening of the battery can.

The winding rod 10 for an electrode assembly according to an embodiment of the present disclosure may be applied to various types of cylindrical battery cells 20. For example, it may be applied to a tabless cylindrical battery cell 20 in which the first uncoated portion of the positive electrode plate or the second uncoated portion of the negative electrode plate described above functions as an electrode tab without a separate electrode tab, as well as a battery cell 20 in which a separate electrode tab is coupled to the positive electrode plate or the negative electrode plate.

Referring to FIGS. 1 and 2, a winding rod 10 for an electrode assembly according to an embodiment of the present disclosure includes a first winding member 100 and a second winding member 200.

The first winding member 100 is inserted into the central hole 22 of the electrode assembly 21.

The first winding member 100 may be formed in various shapes. Referring to FIG. 2, the first winding member 100 may have a cross-section configured to include a first curved portion 110 and a first straight portion 120. The first curved portion 110 is formed in a curve. The first curved portion 110 may vary, but may be formed in the shape of a portion of a circle, that is, an arc. The first straight portion 120 may be configured to connect both ends of the first curved portion 110.

Accordingly, the first winding member 100 may be configured in a shape similar to, for example, a semicircle shown in FIG. 2 .

In addition, the second winding member 200 is inserted into the central hole 22 of the electrode assembly 21 such that the separator 23 is interposed between the first winding member 100 and second winding member 200, and winds the electrode assembly 21 together with the first winding member 100. That is, the first winding member 100 and the second winding member 200 rotates while gripping the separator 23 such that the first winding member 100 is in contact with one side of the separator 23 and the second winding member 200 is in contact with the other side of the separator 23, thereby winding up the electrode assembly 21.

The second winding member 200 may be formed in various shapes. Referring to FIG. 2, the second winding member 200 may have a cross-section configured to include a second curved portion 210 and a second straight portion 220. The second curved portion 210 is formed in a curve. The second curved portion 210 may vary, but may be formed in the shape of a portion of a circle, that is, an arc. The second straight portion 220 may be configured to connect both ends of the second curved portion 210.

Accordingly, the second winding member 200 may be formed in a shape similar to, for example, a semicircle shown in FIG. 2 .

Here, as shown in FIG. 2, the area of the first winding member 100 and the area of the second winding member 200 may be configured to be different from each other. The first winding member 100 and the second winding member 200 rotate in one of the clockwise direction or the counterclockwise direction, and in this case, one of the first winding member 100 and the second winding member 200 may be applied with a greater force.

Therefore, one of the first winding member 100 and the second winding member 200, to which a greater force is applied when rotating, may have a greater area than the other to ensure balance when winding the electrode assembly 21 by the winding member, thereby obtaining the effect of further improving the asymmetry in the shape of the electrode assembly 21 due to the difference in area between the first winding member 100 and the second winding member 200, in addition to an asymmetry prevention portion 130 or 230 described below.

An asymmetry prevention portion 130 or 230 may be formed on at least one of the first winding member 100 and the second winding member 200 to prevent asymmetry of the electrode assembly 21. That is, the asymmetry prevention portion 130 or 230 may be formed only on the first winding member 100, may be formed only on the second winding member 200, or may be formed on both the first winding member 100 and the second winding member 200.

The asymmetry prevention portion 130 or 230 may vary and include, for example, a round portion 131 or 231, a chamfered portion 132 or 232, and a wave pattern portion 133 or 233.

Referring to FIG. 2, the asymmetry prevention portion 130 or 230 may include a round portion 131 or 231, and for example, a first round portion 131 may be formed on the first winding member 100 and a second round portion 231 may be formed on the second winding member 200.

The first round portion 131 is formed at both ends where the first curved portion 110 and the first straight portion 120 meet. In addition, the second round portion 231 is formed at both ends where the second curved portion 210 and the second straight portion 220 meet.

Here, if the first round portion 131 is formed on the first winding member 100 and if the second round portion 231 is formed on the second winding member 200, there is the effect of preventing damage to the separator 23 when the separator 23 is inserted between the first winding member 100 and the second winding member 200.

In addition, if the first round portion 131 is formed on the first winding member 100 and if the second round portion 231 is formed on the second winding member 200, it is possible to improve the asymmetry in the shape of the electrode assembly 21 when the electrode assembly 21 is wound by rotation of the first winding member 100 and the winding member 200. A detailed description thereof will be provided later with reference to experimental data.

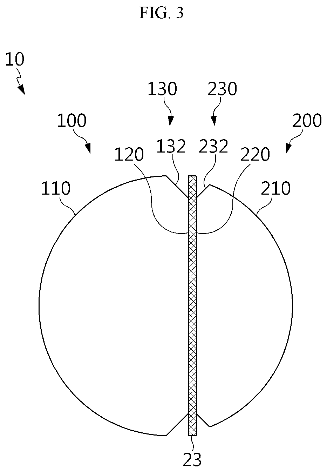

FIG. 3 is a cross-sectional view of a winding rod for an electrode assembly according to a modified embodiment of the present disclosure.

Referring to FIG. 3, the asymmetry prevention portion 130 or 230 may include a chamfered portion 132 or 232. Here, a first chamfered portion 132 is formed at both ends where the first curved portion 110 and the first straight portion 120 meet, and a second chamfered portion 232 is formed at both ends where the second curved portion 210 and the second straight portion 220 meet.

As described above, if the chamfered portions 132 and 232 are formed on the first winding member 100 and the second winding member 200, like the round portions 131 and 231 formed on the first winding member 100 and the second winding member 200, there is the effect of improving the asymmetry in the shape of the electrode assembly 21.

Meanwhile, the descriptions of the previous embodiment related to the round portions 131 and 231 may also be applied to the configurations of the modified embodiment in FIG. 3, which are common therewith.

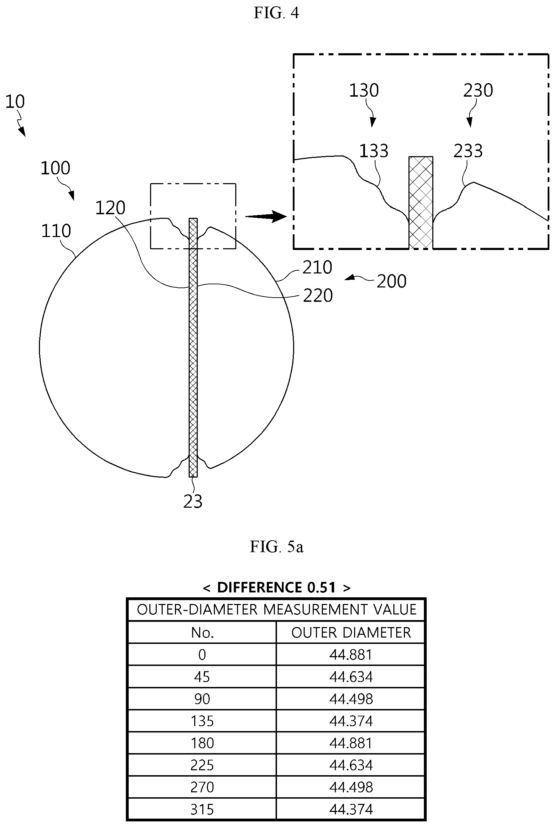

FIG. 4 is a cross-sectional view of a winding rod for an electrode assembly according to another modified embodiment of the present disclosure.

Referring to FIG. 4, the asymmetry prevention portion 130 or 230 may include a wave pattern portion 133 or 233. Here, a first wave pattern portion 133 is formed at both ends where the first curved portion 110 and the first straight portion 120 meet, and a second wave pattern portion 233 is formed at both ends where the second curved portion 210 and the second straight portion 220 meet.

As described above, if the wave pattern portions 133 and 233 are formed on the first winding member 100 and the second winding member 200, like the round portions 131 and 231 formed on the first winding member 100 and the second winding member 200, there is the effect of improving the asymmetry in the shape of the electrode assembly 21.

Meanwhile, the descriptions of the previous embodiment related to the round portions 131 and 231 may also be applied to the configurations of the modified embodiment in FIG. 3, which are common therewith.

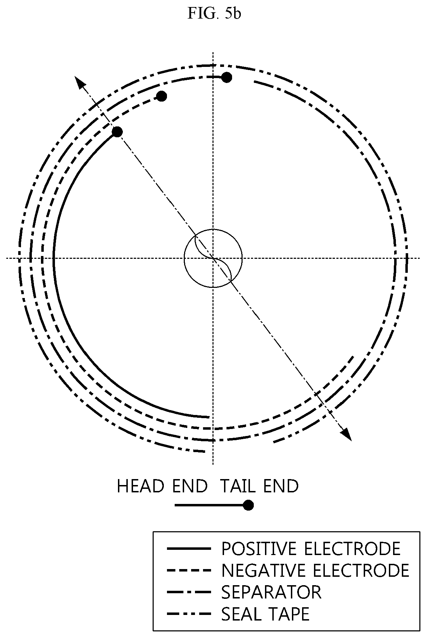

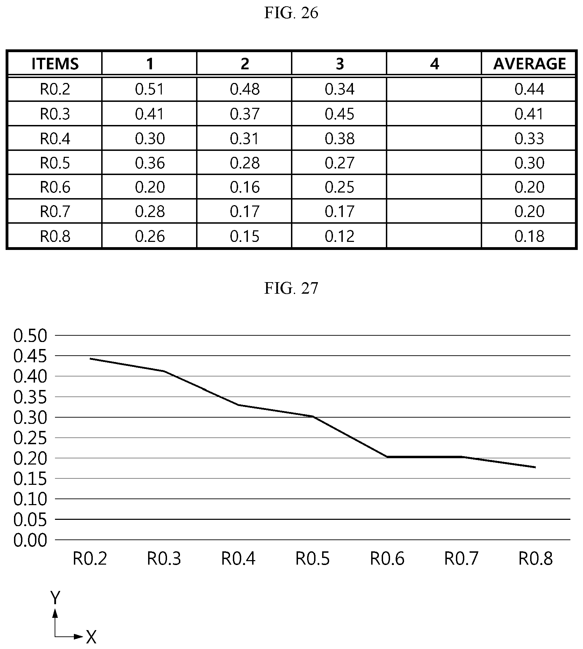

FIGS. 5 to 25 show experimental data of asymmetric differences in round portions having different radii of curvature in a winding rod for an electrode assembly according to an embodiment of the present disclosure, FIG. 26 shows the average value of asymmetry differences according to the experimental data in FIGS. 5 to 25, and FIG. 27 shows a graph according to the average value of asymmetric differences in FIG. 26. In FIG. 26, R is the radius of curvature, and for example, R0.2 indicates that the radius of curvature is 0.2 mm. In addition, in FIG. 26, the average indicates the average value of the asymmetric differences.

The experiments in FIGS. 5 to 25 were conducted under the same conditions in which the thickness of the positive electrode is 162 micrometers, the thickness of the negative electrode is 195 micrometers, and the thicknesses of separator 1 and separator 2 are 13 micrometers, respectively. In addition, the outer diameter of the electrode assembly 21 was measured for each radius of curvature in a plurality of directions while changing the radius of curvature of the first round portion 131 of the first winding member 100 and the radius of curvature of the second round portion 231 of the second winding member, thereby deriving asymmetric differences. The units of the outer diameter and the asymmetry difference are mm.

Here, the asymmetric difference indicates a difference between the maximum outer diameter of the electrode assembly 21 and the minimum outer diameter of the electrode assembly 21, and as the difference between the maximum outer diameter of the electrode assembly 21 and the minimum outer diameter of the electrode assembly 21, i.e., the asymmetry difference, is reduced, the shape thereof becomes closer to a circle, thereby increasing symmetry.

In the experiment, the radii of curvature are 0.2mm, 0.3mm, 0.4mm, 0.5mm, 0.6mm, 0.7mm, and 0.8mm, respectively, and the average value derived from three experiments for each radius of curvature was taken as a final value (see FIG. 26). In addition, the graph in FIG. 27 was obtained based on the results in FIG. 26.

FIGS. 5 to 7 relate to the case where the radius of curvature of the first round portion 131 of the first winding member 100 is 0.2 mm and where the radius of curvature of the second round portion 231 of the second winding member 200 is 0.2 mm, and the electrode assembly 21 was wound by the first winding member 100 and the second winding member 200, and then the outer diameter of the electrode assembly 21 was measured in a plurality of directions, thereby obtaining asymmetric differences.

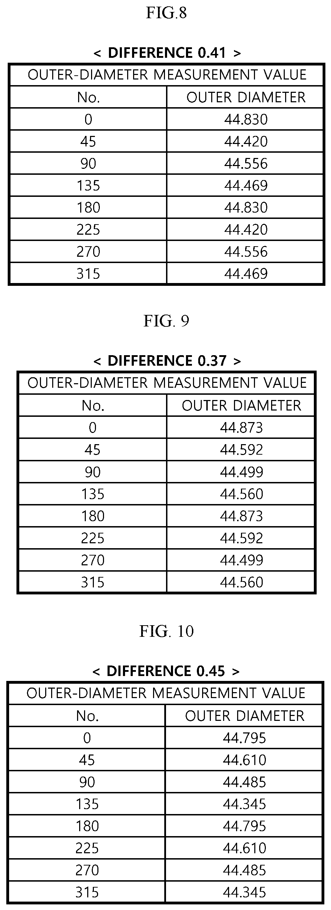

The directions in which the outer diameter of the electrode assembly 21 is measured are the 0-degree direction, 45-degree direction, 90-degree direction, 135-degree direction, 180-degree direction, 225-degree direction, 270-degree direction, and 315- degree direction, and the difference between the largest value and the smallest value among the above values corresponds to the asymmetric difference. Hereinafter, the same is also applied to FIGS. 8 to 25.

Referring to FIG. 5A, in the first experiment in which the radii of curvature of the first round portion 131 and second round portion 231 are 0.2 mm, the outer diameter in the 0-degree direction is 44.881, the outer diameter in the 45-degree direction is 44.634, the outer diameter in the 90-degree direction is 44.498, the outer diameter in the 135-degree direction is 44.374, the outer diameter in the 180-degree direction is 44.881, the outer diameter in the 225-degree direction is 44.634, the outer diameter in the 270-degree direction is 44.498, and the outer diameter in the 315-degree direction is 44.374. Among these, the difference between 44.881, which is the largest outer diameter, and 44.374, which is the smallest outer diameter, is approximately 0.51. That is, in the first experiment in which the radii of curvature of the first round portion 131 and second round portion 231 are 0.2 mm, the asymmetry difference is about 0.51.

In addition, referring to FIG. 5B, it can be seen that the outer diameter of the electrode assembly 21 is maximized in the first round portion 131 of the first winding member 100 and the second round portion 231 of the second winding member 200. In FIG. 5b, the alternated long and short dash line with both arrows indicates the portion where the outer diameter of the electrode assembly 21 is maximized.

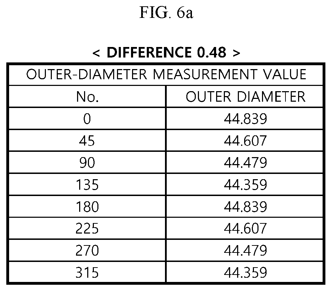

Referring to FIG. 6A, in the second experiment in which the radii of curvature of the first round portion 131 and second round portion 231 are 0.2 mm, the outer diameter in the 0-degree direction is 44.839, the outer diameter in the 45-degree direction is 44.607, the outer diameter in the 90-degree direction is 44.479, the outer diameter in the 135-degree direction is 44.359, the outer diameter in the 180-degree direction is 44.839, the outer diameter in the 225-degree direction is 44.607, the outer diameter in the 270-degree direction is 44.479, and the outer diameter in the 315-degree direction is 44.359. Among these, the difference between 44.839, which is the largest outer diameter, and 44.359, which is the smallest outer diameter, is 0.48. That is, in the second experiment in which the radii of curvature of the first round portion 131 and second round portion 231 are 0.2 mm, the asymmetry difference is 0.48.

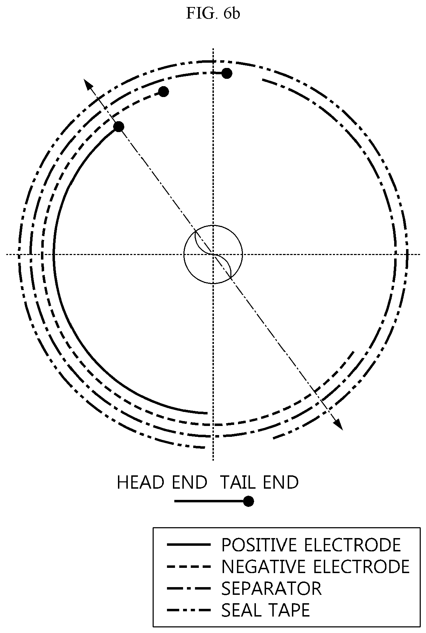

In addition, referring to FIG. 6B, it can be seen that the outer diameter of the electrode assembly 21 is maximized in the first round portion 131 of the first winding member 100 and the second round portion 231 of the second winding member 200. In FIG. 6B, the alternated long and short dash line with both arrows indicates the portion where the outer diameter of the electrode assembly 21 is maximized.

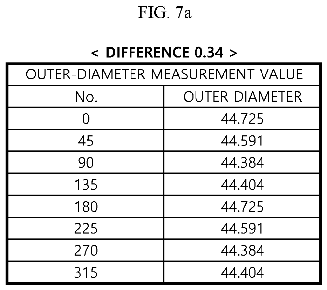

Referring to FIG. 7A, in the third experiment in which the radii of curvature of the first round portion 131 and second round portion 231 are 0.2 mm, the outer diameter in the 0-degree direction is 44.725, the outer diameter in the 45-degree direction is 44.591, the outer diameter in the 90-degree direction is 44.384, the outer diameter in the 135-degree direction is 44.404, the outer diameter in the 180-degree direction is 44.725, the outer diameter in the 225-degree direction is 44.591, the outer diameter in the 270-degree direction is 44.384, and the outer diameter in the 315-degree direction is 44.404. Among these, the difference between 44.725, which is the largest outer diameter, and 44.384, which is the smallest outer diameter, is about 0.34. That is, in the third experiment in which the radii of curvature of the first round portion 131 and second round portion 231 are 0.2 mm, the asymmetry difference is about 0.34.

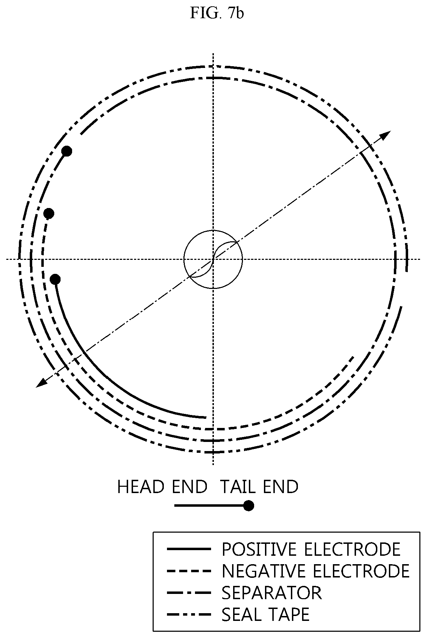

In addition, referring to FIG. 7B, it can be seen that the outer diameter of the electrode assembly 21 is maximized in the first round portion 131 of the first winding member 100 and the second round portion 231 of the second winding member 200. In FIG. 7B, the alternated long and short dash line with both arrows indicates the portion where the outer diameter of the electrode assembly 21 is maximized.

FIGS. 8 to 10 relate to the case where the radius of curvature of the first round portion 131 of the first winding member 100 is 0.3 mm and where the radius of curvature of the second round portion 231 of the second winding member 200 is 0.3 mm, and the electrode assembly 21 was wound by the first winding member 100 and the second winding member 200, and then the outer diameter of the electrode assembly 21 was measured in a plurality of directions, thereby obtaining asymmetric differences.

Referring to FIG. 8, in the first experiment in which the radii of curvature of the first round portion 131 and the second round portion 231 are 0.3 mm, the outer diameter in the 0-degree direction is 44.830, the outer diameter in the 45-degree direction is 44.420, the outer diameter in the 90-degree direction is 44.556, the outer diameter in the 135-degree direction is 44.469, the outer diameter in the 180-degree direction is 44.830, the outer diameter in the 225-degree direction is 44.420, the outer diameter in the 270-degree direction is 44.556, and the outer diameter in the 315-degree direction is 44.469. Among these, the difference between 44.830, which is the largest outer diameter, and 44.420, which is the smallest outer diameter, is 0.41. That is, in the first experiment in which the radii of curvature of the first round portion 131 and second round portion 231 are 0.3 mm, the asymmetry difference is 0.41.

Referring to FIG. 9, in the second experiment in which the radii of curvature of the first round portion 131 and second round portion 231 are 0.3 mm, the outer diameter in the 0-degree direction is 44.873, the outer diameter in the 45-degree direction is 44.592, the outer diameter in the 90-degree direction is 44.499, the outer diameter in the 135-degree direction is 44.560, the outer diameter in the 180-degree direction is 44.873, the outer diameter in the 225-degree direction is 44.592, the outer diameter in the 270-degree direction is 44.499, and the outer diameter in the 315-degree direction is 44.560. Among these, the difference between 44.873, which is the largest outer diameter, and 44.499, which is the smallest outer diameter, is about 0.37. That is, in the second experiment in which the radii of curvature of the first round portion 131 and second round portion 231 are 0.3 mm, the asymmetry difference is 0.37.

Referring to FIG. 10, in the third experiment in which the radii of curvature of the first round portion 131 and second round portion 231 are 0.3 mm, the outer diameter in the 0-degree direction is 44.795, the outer diameter in the 45-degree direction is 44.610, the outer diameter in the 90-degree direction is 44.485, the outer diameter in the 135-degree direction is 44.345, the outer diameter in the 180-degree direction is 44.795, the outer diameter in the 225-degree direction is 44.610, the outer diameter in the 270-degree direction is 44.485, and the outer diameter in the 315-degree direction is 44.345. Among these, the difference between 44.795, which is the largest outer diameter, and 44.345, which is the smallest outer diameter, is 0.45. That is, in the third experiment in which the radii of curvature of the first round portion 131 and second round portion 231 are 0.3 mm, the asymmetry difference is 0.45.

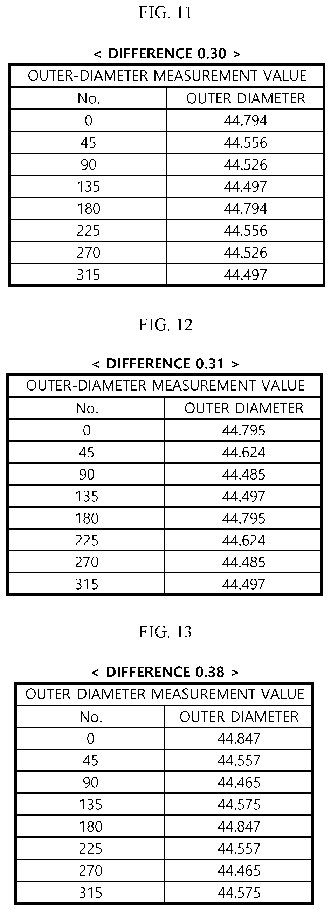

FIGS. 11 to 13 relate to the case where the radius of curvature of the first round portion 131 of the first winding member 100 is 0.4 mm and where the radius of curvature of the second round portion 231 of the second winding member 200 is 0.4 mm, and the electrode assembly 21 was wound by the first winding member 100 and the second winding member 200, and then the outer diameter of the electrode assembly 21 was measured in a plurality of directions, thereby obtaining asymmetric differences.

Referring to FIG. 11, in the first experiment in which the radii of curvature of the first round portion 131 and second round portion 231 are 0.4 mm, the outer diameter in the 0-degree direction is 44.794, the outer diameter in the 45-degree direction is 44.556, the outer diameter in the 90-degree direction is 44.526, the outer diameter in the 135-degree direction is 44.497, the outer diameter in the 180-degree direction is 44.794, the outer diameter in the 225-degree direction is 44.556, the outer diameter in the 270-degree direction is 44.526, and the outer diameter in the 315-degree direction is 44.497. Among these, the difference between 44.794, which is the largest outer diameter, and 44.497, which is the smallest outer diameter, is about 0.30. That is, in the first experiment in which the radii of curvature of the first round portion 131 and second round portion 231 are 0.4 mm, the asymmetry difference is about 0.30.

Referring to FIG. 12, in the second experiment in which the radii of curvature of the first round portion 131 and second round portion 231 are 0.4 mm, the outer diameter in the 0-degree direction is 44.795, the outer diameter in the 45-degree direction is 44.624, the outer diameter in the 90-degree direction is 44.485, the outer diameter in the 135-degree direction is 44.497, the outer diameter in the 180-degree direction is 44.795, the outer diameter in the 225-degree direction is 44.624, the outer diameter in the 270-degree direction is 44.485, and the outer diameter in the 315-degree direction is 44.497. Among these, the difference between 44.795, which is the largest outer diameter, and 44.485, which is the smallest outer diameter, is 0.31. That is, in the second experiment in which the radii of curvature of the first round portion 131 and second round portion 231 are 0.4 mm, the asymmetry difference is 0.31.

Referring to FIG. 13, in the third experiment in which the radii of curvature of the first round portion 131 and second round portion 231 are 0.4 mm, the outer diameter in the 0-degree direction is 44.847, the outer diameter in the 45-degree direction is 44.557, the outer diameter in the 90-degree direction is 44.465, the outer diameter in the 135-degree direction is 44.575, the outer diameter in the 180-degree direction is 44.847, the outer diameter in the 225-degree direction is 44.557, the outer diameter in the 270-degree direction is 44.465, and the outer diameter in the 315-degree direction is 44.575. Among these, the difference between 44.847, which is the largest outer diameter, and 44.465, which is the smallest outer diameter, is about 0.38. That is, in the third experiment in which the radii of curvature of the first round portion 131 and second round portion 231 are 0.4 mm, the asymmetry difference is about 0.38.

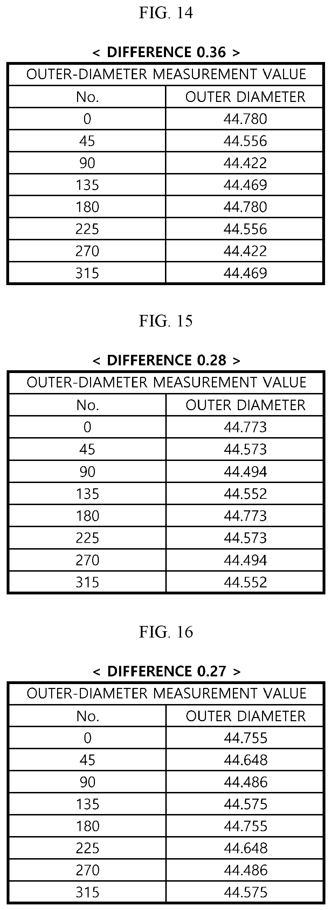

FIGS. 14 to 16 relate to the case where the radius of curvature of the first round portion 131 of the first winding member 100 is 0.5 mm and where the radius of curvature of the second round portion 231 of the second winding member 200 is 0.5 mm, and the electrode assembly 21 was wound by the first winding member 100 and the second winding member 200, and then the outer diameter of the electrode assembly 21 was measured in a plurality of directions, thereby obtaining asymmetric differences.

Referring to FIG. 14, in the first experiment in which the radii of curvature of the first round portion 131 and second round portion 231 are 0.5 mm, the outer diameter in the 0-degree direction is 44.780, the outer diameter in the 45-degree direction is 44.556, the outer diameter in the 90-degree direction is 44.422, the outer diameter in the 135-degree direction is 44.469, the outer diameter in the 180-degree direction is 44.780, the outer diameter in the 225-degree direction is 44.556, the outer diameter in the 270-degree direction is 44.422, and the outer diameter in the 315-degree direction is 44.469. Among these, the difference between 44.780, which is the largest outer diameter, and 44.422, which is the smallest outer diameter, is about 0.36. That is, in the first experiment in which the radii of curvature of the first round portion 131 and second round portion 231 are 0.5 mm, the asymmetry difference is about 0.36.

Referring to FIG. 15, in the second experiment in which the radii of curvature of the first round portion 131 and second round portion 231 are 0.5 mm, the outer diameter in the 0-degree direction is 44.773, the outer diameter in the 45-degree direction is 44.573, the outer diameter in the 90-degree direction is 44.494, the outer diameter in the 135-degree direction is 44.552, the outer diameter in the 180-degree direction is 44.773, the outer diameter in the 225-degree direction is 44.573, the outer diameter in the 270-degree direction is 44.494, and the outer diameter in the 315-degree direction is 44.552. Among these, the difference between 44.773, which is the largest outer diameter, and 44.494, which is the smallest outer diameter, is about 0.28. That is, in the second experiment in which the radii of curvature of the first round portion 131 and second round portion 231 are 0.5 mm, the asymmetry difference is about 0.28.

Referring to FIG. 16, in the third experiment in which the radii of curvature of the first round portion 131 and second round portion 231 are 0.5 mm, the outer diameter in the 0-degree direction is 44.755, the outer diameter in the 45-degree direction is 44.648, the outer diameter in the 90-degree direction is 44.486, the outer diameter in the 135-degree direction is 44.575, the outer diameter in the 180-degree direction is 44.755, the outer diameter in the 225-degree direction is 44.648, the outer diameter in the 270-degree direction is 44.486, and the outer diameter in the 315-degree direction is 44.575. Among these, the difference between 44.755, which is the largest outer diameter, and 44.486, which is the smallest outer diameter, is about 0.27. That is, in the third experiment in which the radii of curvature of the first round portion 131 and second round portion 231 are 0.5 mm, the asymmetry difference is about 0.27.

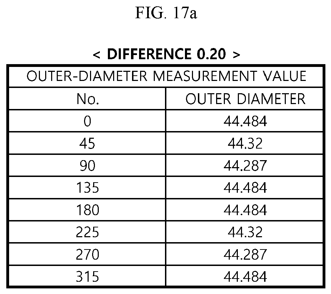

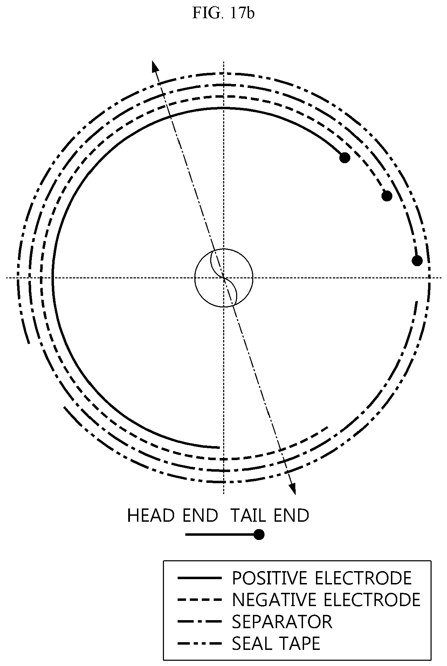

FIGS. 17 to 19 relate to the case where the radius of curvature of the first round portion 131 of the first winding member 100 is 0.6 mm and where the radius of curvature of the second round portion 231 of the second winding member 200 is 0.6 mm, and the electrode assembly 21 was wound by the first winding member 100 and the second winding member 200, and then the outer diameter of the electrode assembly 21 was measured in a plurality of directions, thereby obtaining asymmetric differences.

Referring to FIG. 17A, in the first experiment in which the radii of curvature of the first round portion 131 and second round portion 231 are 0.6 mm, the outer diameter in the 0-degree direction is 44.484, the outer diameter in the 45-degree direction is 44.32, the outer diameter in the 90-degree direction is 44.287, the outer diameter in the 135-degree direction is 44.484, the outer diameter in the 180-degree direction is 44.484, the outer diameter in the 225-degree direction is 44.32, the outer diameter in the 270-degree direction is 44.287, and the outer diameter in the 315-degree direction is 44.484. Among these, the difference between 44.484, which is the largest outer diameter, and 44.287, which is the smallest outer diameter, is about 0.2. That is, in the first experiment in which the radii of curvature of the first round portion 131 and second round portion 231 are 0.6 mm, the asymmetry difference is about 0.2.

In addition, referring to FIG. 17B, it can be seen that the outer diameter of the electrode assembly 21 is maximized in the first round portion 131 of the first winding member 100 and the second round portion 231 of the second winding member 200. In FIG. 17B, the alternated long and short dash line with both arrows indicates the portion where the outer diameter of the electrode assembly 21 is maximized.

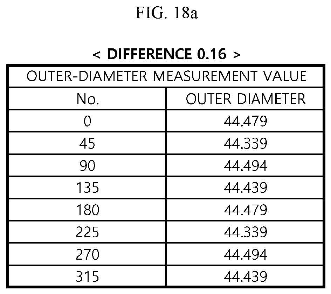

Referring to FIG. 18A, in the second experiment in which the radii of curvature of the first round portion 131 and second round portion 231 are 0.6 mm, the outer diameter in the 0-degree direction is 44.479, the outer diameter in the 45-degree direction is 44.339, the outer diameter in the 90-degree direction is 44.494, the outer diameter in the 135-degree direction is 44.439, the outer diameter in the 180-degree direction is 44.479, the outer diameter in the 225-degree direction is 44.339, the outer diameter in the 270-degree direction is 44.494, and the outer diameter in the 315-degree direction is 44.439. Among these, the difference between 44.494, which is the largest outer diameter, and 44.339, which is the smallest outer diameter, is about 0.16. That is, in the second experiment in which the radii of curvature of the first round portion 131 and second round portion 231 are 0.6 mm, the asymmetry difference is about 0.16.

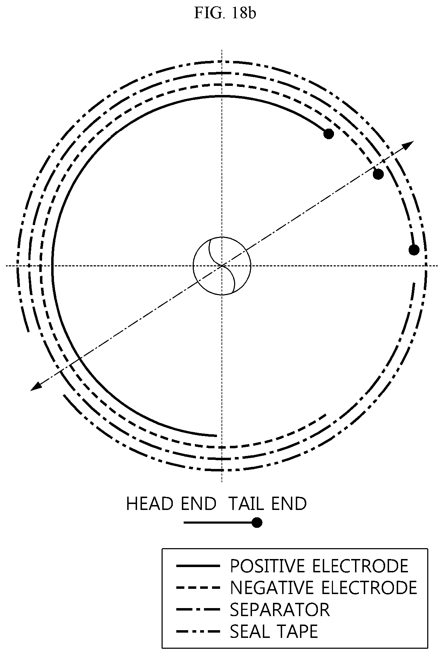

In addition, referring to FIG. 18B, the outer diameter of the electrode assembly 21 is not maximized in the first round portion 131 of the first winding member 100 and the second round portion 231 of the second winding member 200. In FIG. 18B, the alternated long and short dash line with both arrows indicates the portion where the outer diameter of the electrode assembly 21 is maximized.

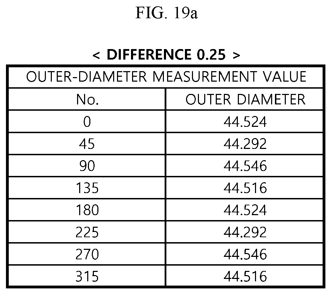

Referring to FIG. 19A, in the third experiment in which the radii of curvature of the first round portion 131 and second round portion 231 are 0.6 mm, the outer diameter in the 0-degree direction is 44.524, the outer diameter in the 45-degree direction is 44.292, the outer diameter in the 90-degree direction is 44.546, the outer diameter in the 135-degree direction is 44.516, the outer diameter in the 180-degree direction is 44.524, the outer diameter in the 225-degree direction is 44.292, the outer diameter in the 270-degree direction is 44.546, and the outer diameter in the 315-degree direction is 44.516. Among these, the difference between 44.546, which is the largest outer diameter, and 44.292, which is the smallest outer diameter, is about 0.25. That is, in the third experiment in which the radii of curvature of the first round portion 131 and second round portion 231 are 0.6 mm, the asymmetry difference is about 0.25.

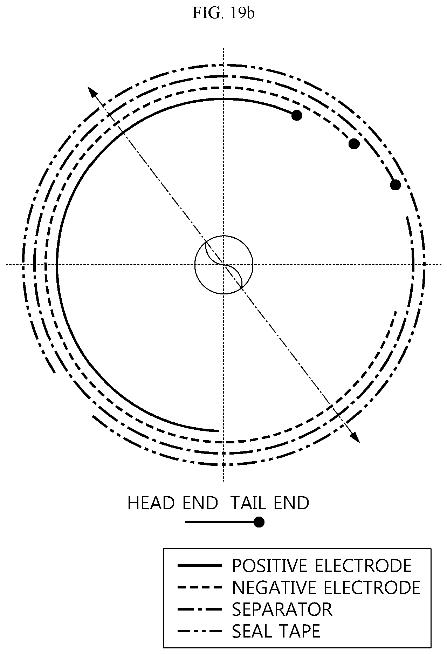

In addition, referring to FIG. 19B, it can be seen that the outer diameter of the electrode assembly 21 is maximized in the first round portion 131 of the first winding member 100 and the second round portion 231 of the second winding member 200. In FIG. 19b, the alternated long and short dash line with both arrows indicates the portion where the outer diameter of the electrode assembly 21 is maximized.

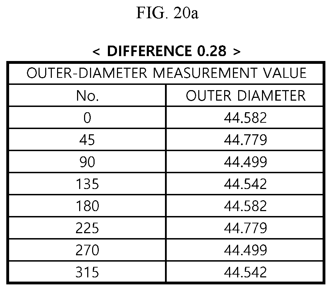

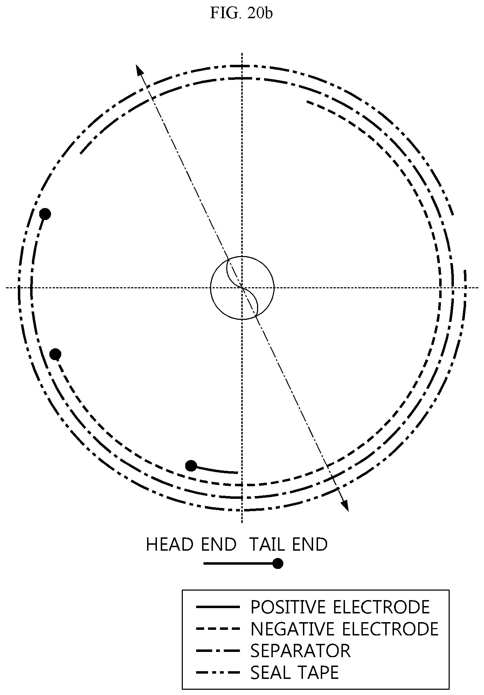

FIGS. 20 to 22 relate to the case where the radius of curvature of the first round portion 131 of the first winding member 100 is 0.7 mm, and where the radius of curvature of the second round portion 231 of the second winding member 200 is 0.7 mm, and the electrode assembly 21 was wound by the first winding member 100 and the second winding member 200, and then the outer diameter of the electrode assembly 21 was measured in a plurality of directions, thereby obtaining asymmetric differences.

Referring to FIG. 20A, in the first experiment in which the radii of curvature of the first round portion 131 and second round portion 231 are 0.7 mm, the outer diameter in the 0-degree direction is 44.582, the outer diameter in the 45-degree direction is 44.779, the outer diameter in the 90-degree direction is 44.499, the outer diameter in the 135-degree direction is 44.542, the outer diameter in the 180-degree direction is 44.582, the outer diameter in the 225-degree direction is 44.779, the outer diameter in the 270-degree direction is 44.499, and the outer diameter in the 315-degree direction is 44.542. Among these, the difference between 44.779, which is the largest outer diameter, and 44.499, which is the smallest outer diameter, is 0.28. That is, in the first experiment in which the radii of curvature of the first round portion 131 and second round portion 231 are 0.7 mm, the asymmetry difference is 0.28.

In addition, referring to FIG. 20B, it can be seen that the outer diameter of the electrode assembly 21 is maximized in the first round portion 131 of the first winding member 100 and the second round portion 231 of the second winding member 200. In FIG. 20B, the alternated long and short dash line with both arrows indicates the portion where the outer diameter of the electrode assembly 21 is maximized.

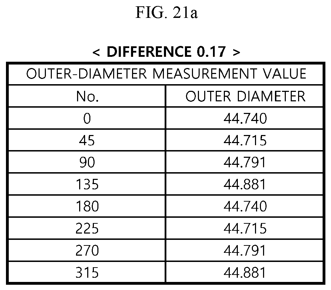

Referring to FIG. 21A, in the second experiment in which the radii of curvature of the first round portion 131 and second round portion 231 are 0.7 mm, the outer diameter in the 0-degree direction is 44.740, the outer diameter in the 45-degree direction is 44.715, the outer diameter in the 90-degree direction is 44.791, the outer diameter in the 135-degree direction is 44.881, the outer diameter in the 180-degree direction is 44.740, the outer diameter in the 225-degree direction is 44.715, the outer diameter in the 270-degree direction is 44.791, and the outer diameter in the 315-degree direction is 44.881. Among these, the difference between 44.881, which is the largest outer diameter, and 44.715, which is the smallest outer diameter, is about 0.17. That is, in the second experiment in which the radii of curvature of the first round portion 131 and second round portion 231 are 0.7 mm, the asymmetry difference is about 0.17.

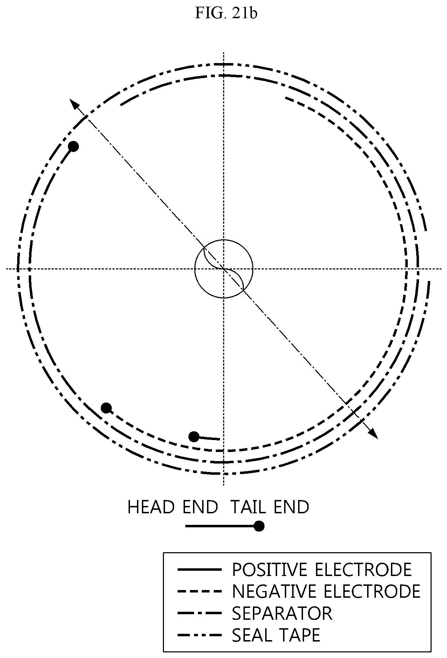

In addition, referring to FIG. 21B, it can be seen that the outer diameter of the electrode assembly 21 is maximized in the first round portion 131 of the first winding member 100 and the second round portion 231 of the second winding member 200. In FIG. 21B, the alternated long and short dash line with both arrows indicates the portion where the outer diameter of the electrode assembly 21 is maximized.

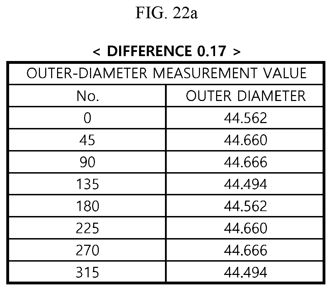

Referring to FIG. 22A, in the third experiment in which the radii of curvature of the first round portion 131 and second round portion 231 are 0.7 mm, the outer diameter in the 0-degree direction is 44.562, the outer diameter in the 45-degree direction is 44.660, the outer diameter in the 90-degree direction is 44.666, the outer diameter in the 135-degree direction is 44.494, the outer diameter in the 180-degree direction is 44.562, the outer diameter in the 225-degree direction is 44.660, the outer diameter in the 270-degree direction is 44.666, and the outer diameter in the 315-degree direction is 44.494. Among these, the difference between 44.666, which is the largest outer diameter, and 44.494, which is the smallest outer diameter, is about 0.17. That is, in the third experiment in which the radii of curvature of the first round portion 131 and second round portion 231 are 0.7 mm, the asymmetry difference is about 0.17.

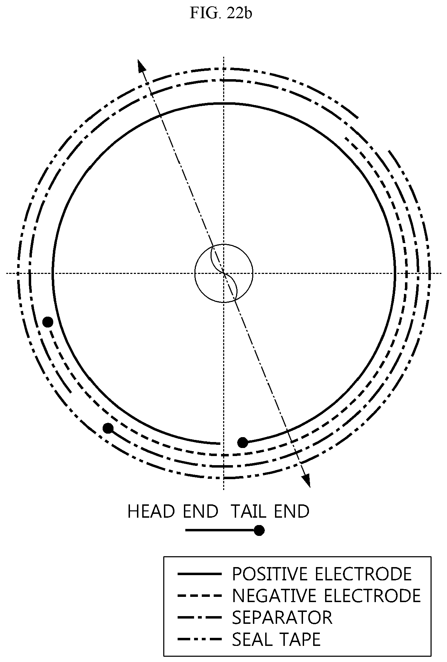

In addition, referring to FIG. 22B, it can be seen that the outer diameter of the electrode assembly 21 is maximized in the first round portion 131 of the first winding member 100 and the second round portion 231 of the second winding member 200. In FIG. 22B, the alternated long and short dash line with both arrows indicates the portion where the outer diameter of the electrode assembly 21 is maximized.

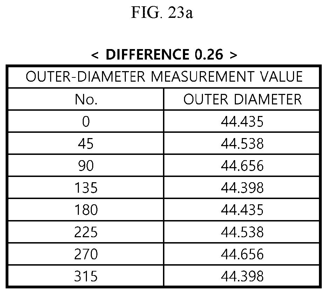

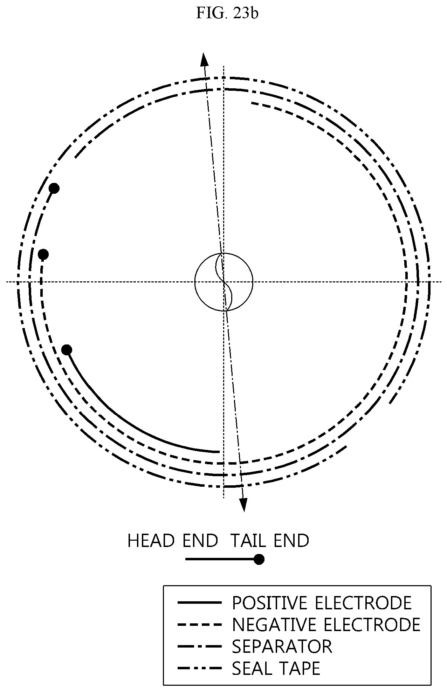

FIGS. 23 to 25 relate to the case where the radius of curvature of the first round portion 131 of the first winding member 100 is 0.8 mm, and where the radius of curvature of the second round portion 231 of the second winding member 200 is 0.8 mm, and the electrode assembly 21 was wound by the first winding member 100 and the second winding member 200, and then the outer diameter of the electrode assembly 21 was measured in a plurality of directions, thereby obtaining asymmetric differences.

Referring to FIG. 23A, in the first experiment in which the radii of curvature of the first round portion 131 and second round portion 231 are 0.8 mm, the outer diameter in the 0-degree direction is 44.435, the outer diameter in the 45-degree direction is 44.538, the outer diameter in the 90-degree direction is 44.656, the outer diameter in the 135-degree direction is 44.398, the outer diameter in the 180-degree direction is 44.435, the outer diameter in the 225-degree direction is 44.538, the outer diameter in the 270-degree direction is 44.656, and the outer diameter in the 315-degree direction is 44.398. Among these, the difference between 44.656, which is the largest outer diameter, and 44.398, which is the smallest outer diameter, is about 0.26. That is, in the first experiment in which the radii of curvature of the first round portion 131 and second round portion 231 are 0.8 mm, the asymmetry difference is about 0.26.

In addition, referring to FIG. 23B, it can be seen that the outer diameter of the electrode assembly 21 is maximized in the first round portion 131 of the first winding member 100 and the second round portion 231 of the second winding member 200. In FIG. 23B, the alternated long and short dash line with both arrows indicates the portion where the outer diameter of the electrode assembly 21 is maximized.

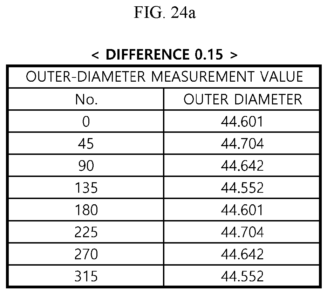

Referring to FIG. 24A, in the second experiment in which the radii of curvature of the first round portion 131 and second round portion 231 are 0.8 mm, the outer diameter in the 0-degree direction is 44.601, the outer diameter in the 45-degree direction is 44.704, the outer diameter in the 90-degree direction is 44.642, the outer diameter in the 135-degree direction is 44.552, the outer diameter in the 180-degree direction is 44.601, the outer diameter in the 225-degree direction is 44.704, the outer diameter in the 270-degree direction is 44.642, and the outer diameter in the 315-degree direction is 44.552. Among these, the difference between 44.704, which is the largest outer diameter, and 44.552, which is the smallest outer diameter, is about 0.15. That is, in the second experiment in which the radii of curvature of the first round portion 131 and second round portion 231 are 0.8 mm, the asymmetry difference is about 0.15.

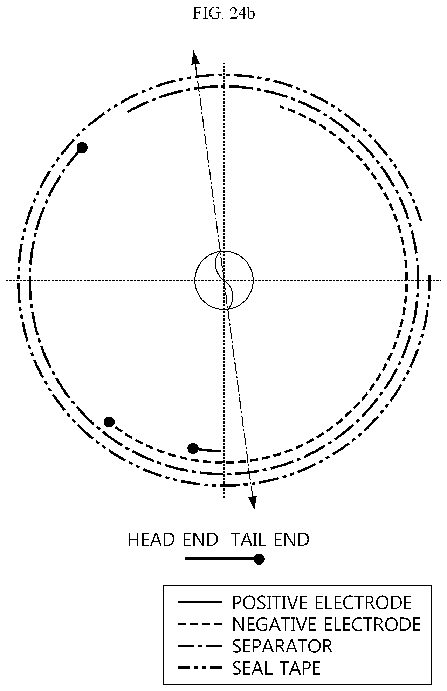

In addition, referring to FIG. 24B, it can be seen that the outer diameter of the electrode assembly 21 is maximized in the first round portion 131 of the first winding member 100 and the second round portion 231 of the second winding member 200. In FIG. 24B, the alternated long and short dash line with both arrows indicates the portion where the outer diameter of the electrode assembly 21 is maximized.

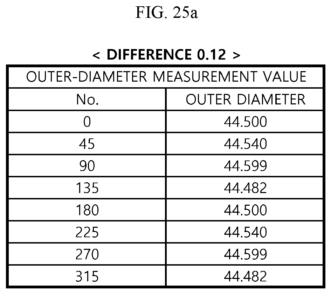

Referring to FIG. 25A, in the third experiment in which the radii of curvature of the first round portion 131 and second round portion 231 are 0.8 mm, the outer diameter in the 0-degree direction is 44.500, the outer diameter in the 45-degree direction is 44.540, the outer diameter in the 90-degree direction is 44.599, the outer diameter in the 135-degree direction is 44.482, the outer diameter in the 180-degree direction is 44.500, the outer diameter in the 225-degree direction is 44.540, the outer diameter in the 270-degree direction is 44.599, and the outer diameter in the 315-degree direction is 44.482. Among these, the difference between 44.599, which is the largest outer diameter, and 44.482, which is the smallest outer diameter, is about 0.12. That is, in the third experiment in which the radii of curvature of the first round portion 131 and second round portion 231 are 0.8 mm, the asymmetry difference is about 0.12.

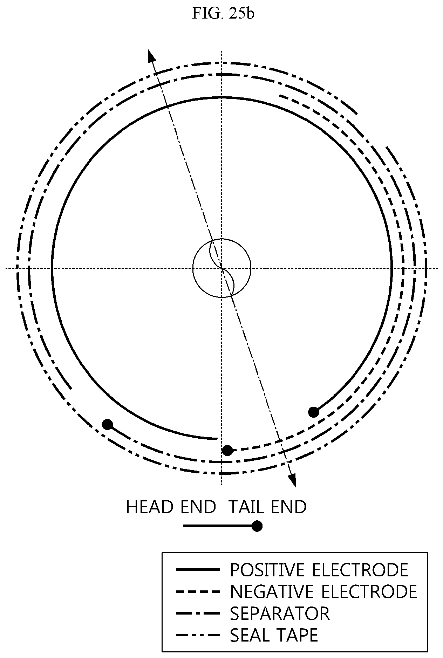

In addition, referring to FIG. 25B, it can be seen that the outer diameter of the electrode assembly 21 is maximized in the first round portion 131 of the first winding member 100 and the second round portion 231 of the second winding member 200. In FIG. 25B, the alternated long and short dash line with both arrows indicates the portion where the outer diameter of the electrode assembly 21 is maximized.

Referring to FIG. 26, the average value of the asymmetric differences obtained three experiments is 0.44 mm when the radii of curvature of the first round portion 131 and second round portion 231 are 0.2 mm, the average value of the asymmetric differences obtained three experiments is 0.41 mm when the radii of curvature of the first round portion 131 and second round portion 231 are 0.3 mm, the average value of the asymmetric differences obtained three experiments is 0.33 mm when the radii of curvature of the first round portion 131 and second round portion 231 are 0.4 mm, the average value of the asymmetric differences obtained three experiments is 0.30 mm when the radii of curvature of the first round portion 131 and second round portion 231 are 0.5 mm, the average value of the asymmetric differences obtained three experiments is 0.20 mm when the radii of curvature of the first round portion 131 and second round portion 231 are 0.6 mm, the average value of the asymmetric differences obtained three experiments is 0.20 mm when the radii of curvature of the first round portion 131 and second round portion 231 are 0.7 mm, and the average value of the asymmetric differences obtained three experiments is 0.18 mm when the radii of curvature of the first round portion 131 and second round portion 231 are 0.8 mm

Referring to both FIG. 26 and FIG. 27, through the above experiments, it can be seen that as the radii of curvature of the first round portion 131 and second round portion 231 increase (i.e., the curvature decreases), the asymmetric difference of the electrode assembly 21 is reduced, thereby improving the asymmetry in the shape of the electrode assembly 21. In addition, there is an effect of preventing cracks in the electrodes that may occur due to asymmetry in the shape of the electrode assembly 21. In FIG. 27, the X-axis direction represents the radii of curvature of the first round portion 131 and second round portion 231, and the Y-axis direction represents the average value of asymmetric differences.

However, if the radii of curvature of the first round portion 131 and second round portion 231 exceed 0.8 mm, there is little difference in improving the asymmetry of the electrode assembly 21, but the portion where the outer diameter of the electrode assembly 21 is maximized is measured randomly, making it difficult to predict the value. Accordingly, the first round portion 131 of the first winding member 100 may have a radius of curvature of 0.4 mm to 0.8 mm, and the second round portion 231 of the second winding member 200 may have a radius of curvature of 0.4 mm to 0.8 mm.

This brings about the effect of improving the asymmetry in the shape of the electrode assembly 21 by optimizing the asymmetric difference of the electrode assembly 21.

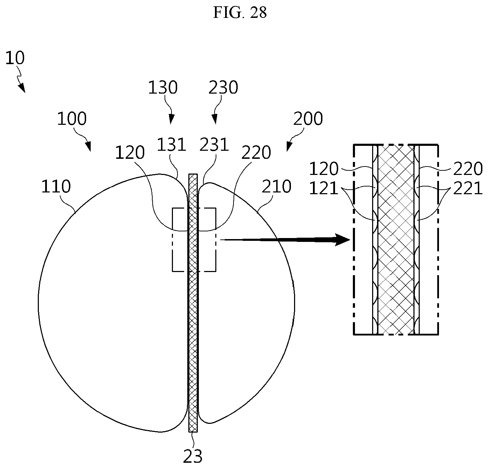

FIG. 28 is a schematically cross-sectional view of a winding rod for an electrode assembly according to another embodiment of the present disclosure.

Referring to FIG. 28, the first straight portion 120 of the first winding member 100 may have a first fine protrusion 121 formed throughout the first straight portion 120 to prevent the separator 23 from slipping. A plurality of first fine protrusions 121 may be provided in, for example, an embossed form.

**In** addition, a second fine protrusion 221 may be formed on the second straight portion 220 of the second winding member 200 to prevent the separator 23 from slipping throughout the second straight portion 220. A plurality of second fine protrusions 221 may be provided in, for example, an embossed form.

**In** this embodiment, the first fine protrusion 121 may be formed only on the first winding member 100, the second fine protrusion 221 may be formed only on the second winding member 200, or the first fine protrusion 121 and the second fine protrusion 221 may be formed on the first winding member 100 and the second winding member 200, respectively.

As described above, since the fine protrusions are formed on the winding member, it is possible to prevent the separator 23 from slipping when the separator 23 is gripped by the first winding member 100 and the second winding member 200, thereby preventing the asymmetry of the electrode assembly from worsening.

FIG. 29 is a diagram schematically illustrating the configuration of a battery pack including a cylindrical battery cell produced using the winding rod for an electrode assembly according to respective embodiments of the present disclosure.

Referring to FIG. 29, a battery pack 30 according to an embodiment of the present disclosure may include one or more cylindrical battery cells 20. Here, the cylindrical battery cell 20 is produced using the winding rod 10 for an electrode assembly according to the respective embodiments of the present disclosure described above.

**In** addition, the battery pack 30 may further include a pack housing 31 for storing the cylindrical battery cell 20, and various devices for controlling charging and discharging of the cylindrical battery cell 20, such as a BMS, a current sensor, a fuse, or the like.

FIG. 30 is a diagram illustrating a vehicle including the battery pack in FIG. 29.

Referring to FIG. 30, a vehicle 40 according to an embodiment of the present disclosure may include one or more cylindrical battery cells 20 or battery packs 30. The cylindrical battery cell 20 is produced using the winding rod 10 for an electrode assembly according to the respective embodiments of the present disclosure described above. In addition, the battery pack 30 may include one or more cylindrical battery cells 20 described above.

Here, the vehicle 40 may include various vehicles designed to use electricity, such as an electric vehicle or a hybrid vehicle.

Although terms indicating directions such as upward, downward, left, and right directions are used in this specification, it is obvious to those skilled in the art that these terms are only for convenience of explanation and may vary depending on the location of the target object or the location of the observer.

As described above, although the present disclosure has been described with reference to limited embodiments and drawings, the present disclosure is not limited thereto, and various modifications and variations are possible within the technical idea of the present disclosure and the scope of equivalence of the claims to be described below by those skilled in the art to which the present disclosure pertains. Therefore, the previously disclosed embodiments should be considered as those intended to describe the present disclosure, instead of those intended to limit the present disclosure. In other words, the true scope of the technical idea of the present disclosure is shown in the claims, and all differences within the scope equivalent thereto should be construed as being included in the present disclosure.

### Industrial Applicability

The present disclosure relates to a winding rod for an electrode assembly, a cylindrical battery cell produced using the same, and a battery pack and a vehicle including the cylindrical battery cell, and is, in particularly, applicable to industries related to secondary batteries.

## Claims

1. A winding rod for an electrode assembly to wind a jelly roll-type electrode assembly, which has a structure in which a positive electrode, a negative electrode, and a separator interposed therebetween are wound in one direction and has a central hole formed at the center, the winding rod comprising:
a first winding member inserted into the central hole of the electrode assembly; and
a second winding member inserted into the central hole of the electrode assembly such that the separator is interposed between the first winding member and the second winding member, and configured to wind the electrode assembly together with the first winding member,
wherein an asymmetry prevention portion is formed on at least one of the first winding member and the second winding member to prevent asymmetry of the electrode assembly.

2. The winding rod for an electrode assembly according to claim 1,
wherein the area of the first winding member is different from the area of the second winding member.

3. The winding rod for an electrode assembly according to claim 1,
wherein the cross-section of the first winding member comprises:
a first curved portion formed in a curve; and
a first straight portion configured to connect both ends of the first curved portion.

4. The winding rod for an electrode assembly according to claim 3,
wherein the asymmetry prevention portion comprises a first round portion formed on both ends where the first curved portion and the first straight portion meet.

5. The winding rod for an electrode assembly according to claim 3,
wherein the asymmetry prevention portion comprises a first chamfered portion formed on both ends where the first curved portion and the first straight portion meet.

6. The winding rod for an electrode assembly according to claim 3,
wherein the asymmetry prevention portion comprises a first wave pattern portion formed on both ends where the first curved portion and the first straight portion meet.

7. The winding rod for an electrode assembly according to claim 1,
wherein the cross-section of the second winding member comprises:
a second curved portion formed in a curve; and
a second straight portion configured to connect both ends of the second curved portion.

8. The winding rod for an electrode assembly according to claim 7,
wherein the asymmetry prevention portion comprises a second round portion formed on both ends where the second curved portion and the second straight portion meet.

9. The winding rod for an electrode assembly according to claim 7,
wherein the asymmetry prevention portion comprises a second chamfered portion formed on both ends where the second curved portion and the second straight portion meet.

10. The winding rod for an electrode assembly according to claim 7,
wherein the asymmetry prevention portion comprises a second wave pattern portion formed on both ends where the second curved portion and the second straight portion meet.

11. The winding rod for an electrode assembly according to claim 4,
wherein the first round portion has a radius of curvature of 0.4 mm to 0.8 mm.

12. The winding rod for an electrode assembly according to claim 8,
wherein the second round portion has a radius of curvature of 0.4 mm to 0.8 mm.

13. The winding rod for an electrode assembly according to claim 3,
wherein the first straight portion comprises a first fine protrusion formed throughout the first straight portion to prevent the separator from slipping.

14. The winding rod for an electrode assembly according to claim 7,
wherein the second straight portion comprises a second fine protrusion formed throughout the second straight portion to prevent the separator from slipping.

15. A cylindrical battery cell produced using the winding rod for an electrode assembly according to any one of claims 1 to 14.

16. A battery pack comprising at least one cylindrical battery cell according to claim 15.

17. A vehicle comprising at least one cylindrical battery cell according to claim 15.
